**Europäisches Patentamt**

**European Patent Office**

**Office européen des brevets**

(19)

(11) Veröffentlichungsnummer : **0 310 905 B1**

(12)    **EUROPÄISCHE PATENTSCHRIFT**

(45) Veröffentlichungstag der Patentschrift :
17.04.91 Patentblatt 91/16

(51) Int. Cl.$^5$ : **B29C 45/77, B29C 45/28**

(21) Anmeldenummer : **88115799.4**

(22) Anmeldetag : **26.09.88**

(54) **Verfahren zur Steuerung einer Spritzgiessmaschine und Spritzgiessmaschine zur Durchführung des Verfahrens.**

(30) Priorität : **29.09.87 AT 2471/87**

(43) Veröffentlichungstag der Anmeldung :
**12.04.89 Patentblatt 89/15**

(45) Bekanntmachung des Hinweises auf die
Patenterteilung :
**17.04.91 Patentblatt 91/16**

(84) Benannte Vertragsstaaten :
**AT BE CH DE FR GB IT LI NL SE**

(56) Entgegenhaltungen :
**DE-A- 2 425 621**
**FR-A- 2 024 655**
**GB-A- 686 010**
**GB-A- 1 429 311**

(73) Patentinhaber : **Engel Maschinenbau
Gesellschaft m.b.H.
A-4311 Schwertberg (AT)**

(72) Erfinder : **Steinbichler, Georg, Dipl.-Ing.
Schacherbergstrasse 2
A-4311 Schwertberg (AT)**

(74) Vertreter : **Hofinger, Engelbert et al
Torggler-Hofinger Wilhelm-Greil-Strasse 16
A-6020 Innsbruck (AT)**

## Beschreibung

Die Erfindung bezieht sich auf ein Verfahren zur Steuerung einer Spritzgießmaschine, wobei Spritzgut unter hohem Druck von einer Einspritzvorrichtung über eine Zuflußöffnung in einen von zwei Formhälften abgegrenzten Formhohlraum eingespritzt und der Druckverlauf in dem Formhohlraum gemessen und das Meßergebnis einer Steuervorrichtung zugeführt wird.

Weiters bezieht sich die Erfindung auf eine Spritzgießmaschine zur Durchführung des Verfahrens mit einer aus zwei Formhälften bestehenden Gießform, zwei Formträgerplatten, einer Formschließeinrichtung und einer Einspritzvorrichtung, wobei vorteilhaft an einer Wand des Formhohlraumes, die das Spritzgut aufnimmt, ein Drucksensor angeordnet ist, der an eine Steuervorrichtung der Spritzgießmaschine angeschlossen ist.

Aus der DE-A1-2425621 ist eine derartige Spritzgießmaschine bekannt, bei der zur Steuerung der Massetemperatur der Querschnitt des Spritzdüsenkanals und/ oder des Angußkanals im Werkzeug veränderbar ist.

Die GB-A-686 010 beschreibt eine Spritzgießmaschine, bei der das Steuersystem der Einspritzvorrichtung an einen im Formhohlraum befindlichen Sensor angeschlossen ist. Erreicht der Druck im Formhohlraum einen bestimmten Wert wird die Zufuhr von plastifiziertem Material abgebrochen.

Für das nachdruckfreie Spritzgießen von Kunststoff-Formteilen höchster Präzision ist ein Abbrechen der Einspritzung mit hoher Reproduziergenauigkeit notwendig.

Aufgabe der Erfindung ist es, ein Verfahren und eine Spritzgießmaschine zu schaffen, mittels denen Spritzgießteile höchster Präzision gefertigt werden können.

Das erfindungsgemäße Verfahren ist dadurch gekennzeichnet, daß die Zuflußöffnung verschlossen wird, wenn der durch das Einspritzen erzeugte Forminnendruck einen vorgegebenen Wert erreicht hat.

Das erfindungsgemäße Verfahren unterscheidet sich von herkömmlichen Spritzgießverfahren dadurch, daß die Versiegelung der Zuflußöffnung druckabhängig und nicht zeitabhängig, oder durch Erstarrung der Schmelze erfolgt. Dadurch, daß die Zuflußöffnung dann verschlossen wird, wenn der Forminnendruck einen bestimmten Wert erreicht hat, werden nachteilige Nachdruckorientierungen vermieden.

Vorteilhaft ist vorgesehen, daß der Forminnendruck über ein abhängiges Kraft- und Verformungssignal gemessen wird.

Beispielsweise kann der Forminnendruck indirekt über die Holmdehnung oder die Verformung der Formträgerplatte gemessen werden oder es werden die Kräfte am Schließsystem gemessen.

Ein Ausführungsbeispiel des erfindungsgemäßen Verfahrens sieht vor, daß das Schließen erfolgt bevor der Forminnendruck seinen Maximalwert erreicht hat.

Die erfindungsgemäße Spritzgießmaschine ist dadurch gekennzeichnet, daß an die Steuervorrichtung ein Schließorgan angeschlossen ist, das die Zuflußöffnung zum Formhohlraum sperrt.

Vorteilhaft ist vorgesehen, daß das Sperrorgan von einem Stempel gebildet wird, der in einer Formhälfte gelagert ist, die der Zuflußöffnung gegenüberliegt.

Der Stempel wird vorteilhaft von einem doppelt wirkenden Kolben beaufschlagt.

Ein Ausführungsbeispiel der Erfindung sieht vor, daß an der Mündung der Zuflußöffnung in den Formhohlraum eine Vertiefung in der Formwandung vorgesehen ist, die den Stempel mit Kleinstspiel aufnimmt.

Nachfolgend wird ein Ausführungsbeispiel der Erfindung anhand der Figuren der beiliegenden Zeichnungen eingehend beschrieben.

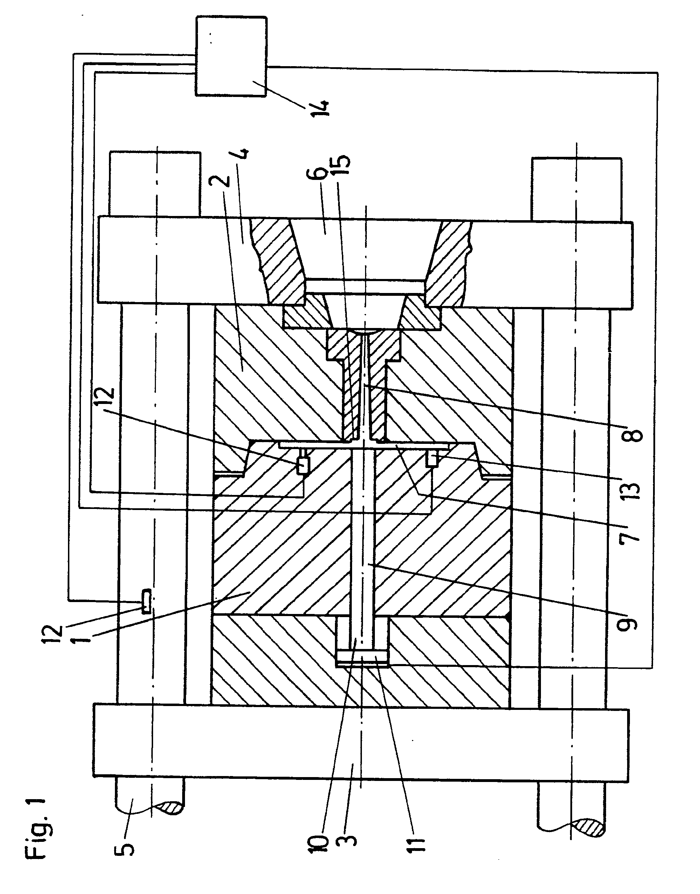

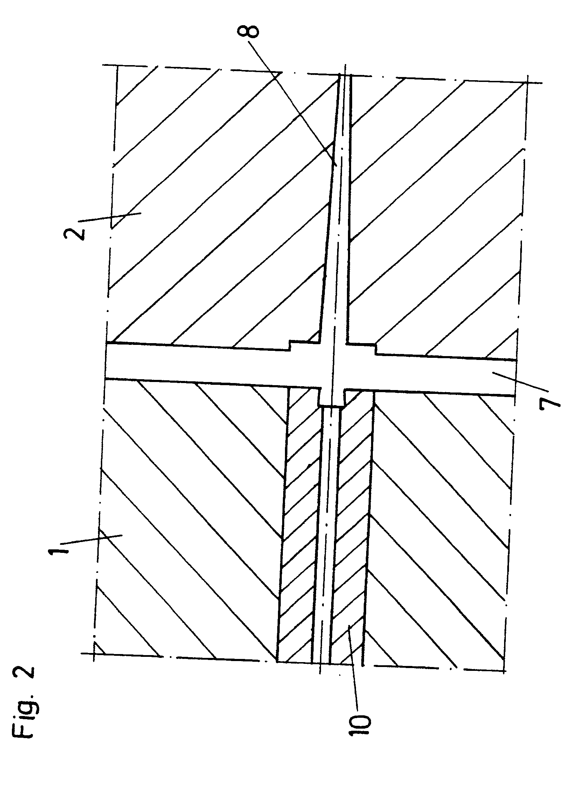

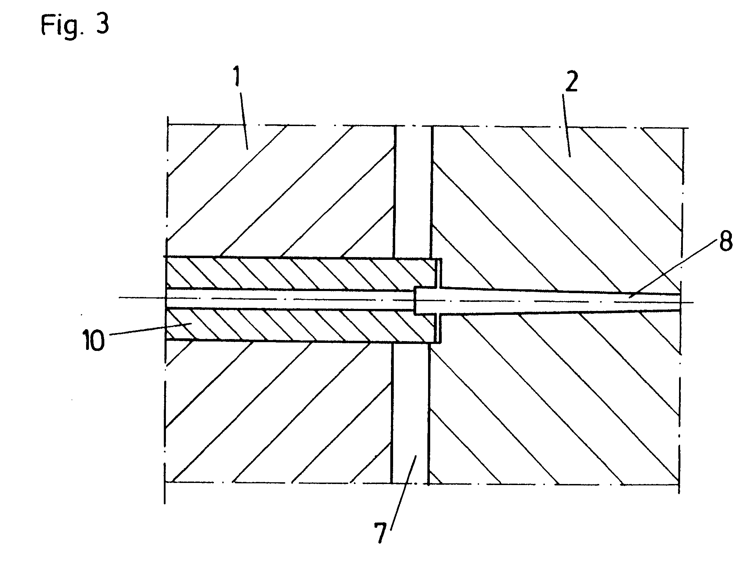

Die Fig. 1 zeigt einen schematisch gehaltenen Schnitt durch eine erfindungsgemäße Spritzgießform zur Durchführung des Verfahrens und Teile der Spritzgießmaschine, die Fig. 2 zeigt einen Schnitt durch die Formhälften im Bereich des Formhohlraumes bei geöffneter Zuflußöffnung und die Fig. 3 zeigt einen gleichartigen Schnitt wie die Fig. 2 bei geschlossener Zuflußöffnung.

In den Figuren der Zeichnung sind nur die Teile der Spritzgießmaschine eingezeichnet, die sich unmittelbar auf die Erfindung beziehen, die anderen Teile, beispielsweise der Schließmechanismus und die Schneckenplastifiziereinheit, sowie die Granulatzuführung sind nicht gezeigt, sie sind nach dem herkömmlichen Stand der Technik gefertigt.

Wie aus der Fig. 1 ersichtlich sind die beiden Formhälften 1, 2 in herkömmlicher Weise einerseits auf der beweglichen Formträgerplatte 3 und auf der feststehenden Formträgerplatte 4 montiert. Die bewegliche Formträgerplatte 3 ist mit dem nicht gezeigten Schließmechanismus verbunden und auf den Holmen 5 verschiebbar.

Die feststehende Formträgerplatte 4 weist einen Durchbruch 6 für das Einspritzaggregat auf.

Die Formhälften 1, 2 grenzen bei geschlossenem Werkzeug den Formhohlraum 7 ab. In der Formhälfte 2 befindet sich die kanalförmige Zuflußöffnung 8, durch die das plastifizierte Spritzgut von der Einspritzeinrichtung zum Formhohlraum 7 gelangt.

Die Formhälfte 1 ist mit einer Bohrung 9 versehen, in der ein Stempel 10 geführt ist Der Stempel 10 wird von einem doppelt wirkenden Hydraulikkolben 11 beaufschlagt.

Zur Messung des Forminnendruckes kann entweder ein Kraft- oder Dehnungsaufnehmer 12 im Werkzeug an einem oder mehreren der Holme 5 oder in den Aufspannplatten der Spritzgießmaschine vorgesehen sein, oder es kann ein Drucksensor 13 unmittelbar an der Formwandung einer Formhälfte im Ausführungsbeispiel der Formhälfte 1 vorgesehen sein.

Das erfindungsgemäße Verfahren läuft folgendermaßen ab :

Nach erfolgter Voll- oder Teilfüllung des Formhohlraumes 7 bzw. der Formhohlräume 7 wird bei Erreichen eines bestimmten Druckwertes, der mittels des Drucksensors 13 oder des Kraft- oder Dehnungsaufnehmers 12 gemessen wird, ohne Zeitverzögerung von der Maschinensteuerung 14 der Befehl für das Ausfahren des Stempels 10 gegeben.

Der Stempel 10 verschließt, wie in der Fig. 3 gezeigt, die Zuflußöffnung 8 in bezug auf den Formhohlraum 7 hermetisch.

Die Bewegung des Stempels 10 erfolgt über ein direkt oder indirekt gekoppeltes Antriebselement, im Ausführungsbeispiel den doppelt wirksamen Kolben 11.

Beim Ausfahren des Stempels 10 kann gleichzeitig der Anguß vom Formteil bzw. Spritzling abgestanzt oder ein maßgenauer Durchbruch im Formteil gebildet werden.

Im Ausführungsbeispiel ist die Formhälfte 2 im Bereich der Mündung der Zuflußöffnung 8 mit einer Vertiefung 15 versehen, die, wie in der Fig. 3 gezeigt, den Stempel 10 aufnimmt, wobei zwischen dem Mantel des Stempels 10 und der Zylinderwand der Vertiefung 15 das kleinstmögliche Spiel vorgesehen ist.

## Ansprüche

1. Verfahren zur Steuerung einer Spritzgießmaschine, wobei Spritzgut unter hohem Druck von einer Einspritzvorrichtung über eine Zuflußöffnung (8) in einen von zwei Formhälften (1, 2) abgegrenzten Formhohlraum (7) eingespritzt und der Druckverlauf in dem Formhohlraum (7) gemessen und das Meßergebnis einer Steuervorrichtung zugeführt wird, dadurch gekennzeichnet, daß die Zuflußöffnung (8) verschlossen wird, wenn der durch das Einspritzen erzeugte Forminnendruck einen vorgegebenen Wert erreicht hat.

2. Verfahren nach Anspruch 1, dadurch gekennzeichnet, daß der Forminnendruck über ein abhängiges Kraft- und Verformungssignal gemessen wird.

3. Verfahren nach Anspruch 1, dadurch gekennzeichnet, daß das Schließen erfolgt bevor der Forminnendruck seinen Maximalwert erreicht hat.

4. Spritzgießmaschine zur Durchführung des Verfahrens nach mindestens einem der Ansprüche 1 bis 3, mit einer aus zwei Formhälften (1, 2) bestehenden Gießform, zwei Formträgerplatten (3, 4), einer Formschließeinrichtung und einer Einspritzvorrichtung, wobei vorteilhaft an einer Wand des Formhohlraumes (7), die das Spritzgut aufnimmt, ein Druck- oder Kraftsensor (12, 13) angeordnet ist, der an eine Steuervorrichtung der Spritzgießmaschine angeschlossen ist, dadurch gekennzeichnet, daß an die Steuervorrichtung ein Sperrorgan angeschlossen ist, das die Zuflußöffnung (8) zum Formhohlraum (7) sperrt.

5. Spritzgießmaschine nach Anspruch 4, dadurch gekennzeichnet, daß das Sperrorgan von einem Stempel (10) gebildet wird, der in der Formhälfte (1) gelagert ist, die der Zuflußöffnung (8) gegenüberliegt.

6. Spritzgießmaschine nach Anspruch 5, dadurch gekennzeichnet, daß der Stempel (10) von einem doppelt wirkenden Kolben (11) beaufschlagt ist.

7. Spritzgießmaschine nach den Ansprüchen 4 und 5, dadurch gekennzeichnet, daß an der Mündung der Zuflußöffnung (8) in den Formhohlraum (7) eine Vertiefung (15) in der Formwandung vorgesehen ist, die den Stempel (10) mit Kleinstspiel aufnimmt.

## Claims

1. A method of controlling an injection moulding machine wherein injection material is injected under high pressure by an injection apparatus into a mould cavity (7) which is defined by two mould halves (1, 2), by way of a feed flow opening (8) and the pressure variation in the mould cavity (7) is measured and the measurement result is passed to a control apparatus characterised in that the feed flow opening (8) is closed when the internal mould pressure produced by the injection operation has reached a predetermined value.

2. A method according to claim 1 characterised in that the internal mould pressure is measured by way of a dependent force and deformation signal.

3. A method according to claim 1 characterised in that the closing operation is effected before the internal mould pressure has reached its maximum value.

4. An injection moulding machine for carrying out the method according to at least one of claims 1 to 3 comprising a moulding mould comprising two mould halves (1, 2), two mould carrier plates (3, 4), a mould closing means and an injection apparatus, wherein a pressure or force sensor (12, 13) which is connected to a control apparatus of the injection moulding machine is advantageously arranged on a wall of the mould cavity (7) which receives the injection material, characterised in that connected to the control apparatus is a closure member which closes the feed flow opening (8) to the mould cavity (7).

5. An injection moulding machine according to claim 4 characterised in that the closure member is formed by a ram (10) which is mounted in the mould half (1) which is in opposite relationship to the feed flow opening (8). :

6. An injection moulding machine according to claim 5 characterised in that the ram (10) is operated by a double-acting piston (11).

7. An injection moulding machine according to claims 4 and 5 characterised in that provided at the mouth orifice of the feed flow opening (8) into the mould cavity (7) is a depression (15) in the wall of the mould, itch receives the ram (10) with very small clearance.


## Revendications

1. Procédé de commande d'une machine de moulage par injection, suivant lequel une matière est injectée sous pression élevée au moyen d'un dispositif correspondant par un orifice d'admission (8) dans une cavité de moulage (7) délimitée par deux demi-moules (1, 2) et la variation de pression dans la cavité de moulage (7) est mesurée, puis le résultat de la mesure est envoyé à un dispositif de commande, caractérisé en ce que l'orifice d'admission (8) est obturé lorsque la pression interne du moule produite par l'injection a atteint une valeur prescrite.

2. Procédé selon la revendication 1, caractérisé en ce que la pression interne du moule est mesurée au moyen d'un signal dynamométrique et de déformation qui en est fonction.

3. Procédé selon la revendication 1, caractérisé en ce que l'obturation a lieu avant que la pression interne du moule ait atteint sa valeur maximale.

4. Machine de moulage par injection pour la mise en oeuvre du procédé selon au moins l'une des revendications 1 à 3, comprenant un moule de coulée se composant de deux demi-moules (1, 2), deux plaques de support de moule (3, 4), un dispositif de fermeture du moule, et un dispositif d'injection, un manomètre ou un dynamomètre (12, 13), qui est connecté à un dispositif de commande de la machine de moulage par injection et qui est avantageusement disposé sur une paroi de la cavité (7) du moule qui reçoit la matière d'injection, caractérisée en ce qu'un organe de fermeture raccordé au dispositif de commande obture l'orifice (8) d'admission à la cavité (7) du moule.

5. Machine de moulage par injection selon la revendication 4, caractérisée en ce que l'organe de fermeture est formé d'un piston (10) qui est monté dans le demi-moule (1) se trouvant en face de l'orifice d'admission (8).

6. Machine de moulage par injection selon la revendication 5, caractérisée en ce que le piston (10) est piloté lui-même par un vérin (11) à double effet.

7. Machine de moulage par injection selon les revendications 4 et 5, caractérisée en ce qu'un chambrage (15) prévu dans la paroi du moule à l'embouchure de l'orifice (8) d'admission dans la cavité (7) du moule reçoit le piston (10) avec un jeu minimal.

EP 0 310 905 B1

Fig. 1

Fig. 2

Fig. 3

EP 0 310 905 B1